# EUROPEAN PATENT APPLICATION

(11) **EP 3 753 868 A1**
(43) Date of publication of application: **23.12.2020**
(21) Application number: 20768495.2
(22) Date of filing: 10.04.2020
(51) Int. Cl.: B65G 1/137

(54) **INVENTORY MANAGEMENT SYSTEM AND INVENTORY MANAGEMENT METHOD**

(30) Priority: 16.04.2019 JP 2019077962
(71) Applicant: Fast Retailing Co., Ltd., Yamaguchi 754-0894 (JP)
(72) Inventor: IWASE, Yoshinori, Yamaguchi-shi Yamaguchi 754-0894 (JP); IMANAGA, Yasutaka, Yamaguchi-shi Yamaguchi 754-0894 (JP)
(74) Representative: Ipsilon
(86) International application number: PCT/JP2020/016179
(87) International publication number: WO 2020/213538

(57) **Abstract**

To manage an accurate inventory quantity of products in real time.

An inventory management system (100) includes a server (10) that manages an inventory quantity of products by counting the number of wireless communication tags, in which the server (10) adjusts, when a difference occurs between an actual inventory quantity of the products in a store and the number of wireless communication tags, a count value of the number of wireless communication tags according to a circumstance causing the difference, and manages the inventory quantity of the products based on the count value of the number of wireless communication tags after the adjustment.

## Description

### Technical Field

The present invention relates to an inventory management system and an inventory management method.

### Background Art

Conventionally, an inventory of products has been managed by using radio frequency identifier (RFID) tags attached to the products. The products in stock can be individually identified by reading an ID unique to each product from the RFID tag of each product.

An inventory status of each product can be easily grasped, and RFID tags of many products can be collectively read at the time of stocktaking, which can significantly reduce a workload of a clerk.

Since one RFID tag is attached to one product, an inventory quantity of products can be known by counting the number of RFID tags. However, in a case where the association between the product and the RFID tag is lost due to the loss of the RFID tag, forgetting to attach the RFID tag, or damage to the RFID tag, the product cannot be identified by reading the RFID tag.

Therefore, an inventory quantity of products managed based on the number of RFID tags may not match an actual inventory quantity. In order to perform clear product management even in a case of the mismatch, information such as the reason or situation of the mismatch is input and stored (see Patent Literature 1).

### Citation List

### Patent Literature

Patent Literature 1: JP 6302857 B2

### Summary of Invention

### Technical Problem

Since an inventory quantity of products is important information for a clerk of a store, accuracy in inventory quantity is required in real time. The inventory quantity of products can match an actual inventory quantity of products by performing stocktaking in which RFID tags of all products in the store are read and the inventory quantity of products is updated, but the stocktaking is a cumbersome task, and thus cannot be frequently performed.

An objective of the present invention is to manage an accurate inventory quantity of products in real time.

### Solution to Problem

According to an aspect of the present invention, an inventory management system (100) including a server (10) that manages an inventory quantity of products by counting the number of wireless communication tags is provided, in which the server (10) adjusts, when a difference occurs between an actual inventory quantity of the products in a store and the number of wireless communication tags, a count value of the number of wireless communication tags according to a circumstance causing the difference, and manages the inventory quantity of the products based on the count value of the number of wireless communication tags after the adjustment.

Further, according to an aspect of the present invention, an inventory management method of an inventory management system (100) that manages an inventory quantity of products by counting the number of wireless communication tags is provided, the inventory management method including: a first step of adjusting, by the inventory management system (100) when a difference occurs between an actual inventory quantity of the products in a store and the number of wireless communication tags, a count value of the number of wireless communication tags according to a circumstance causing the difference; and a second step of managing, by the inventory management system (100), the inventory quantity of the products based on the count value of the number of wireless communication tags after the adjustment.

### Advantageous Effects of Invention

According to the present invention, it is possible to manage an accurate inventory quantity of products in real time.

### Brief Description of Drawings

Fig. 1 is an overall configuration diagram of an inventory management system.
Fig. 2 is an internal configuration diagram of a server.
Fig. 3 is a conceptual configuration diagram of product inventory information.
Fig. 4 is a conceptual configuration diagram of stock keeping unit (SKU) inventory information.
Fig. 5 is a conceptual configuration diagram of a difference occurrence history.
Fig. 6 is a flowchart of processing performed by a server to count an inventory quantity of products.
Fig. 7 is another conceptual configuration diagram of the SKU inventory information.
Fig. 8 is a screen configuration diagram of a server or an external terminal.

### Description of Embodiments

Embodiments of an inventory management system and an inventory management method of the present invention will be described below with reference to the drawings.

### (Inventory Management System)

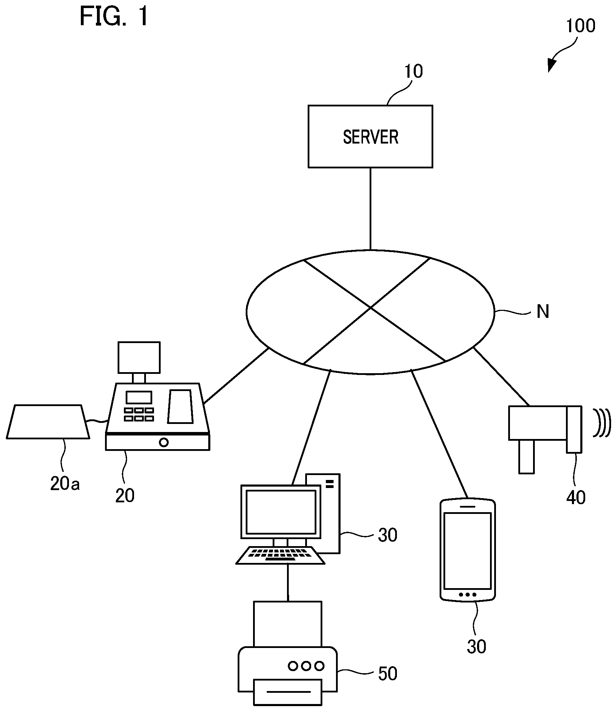

Fig. 1 illustrates an inventory management system 100 according to an embodiment of the present invention. The inventory management system 100 according to the present embodiment performs product inventory management by using a wireless communication tag attached to a product. The wireless communication tag is a tag capable of transmitting stored information through wireless communication, and examples thereof include a radio frequency identifier (RFID) tag and a tag using wireless communication such as Bluetooth (registered trademark).

Hereinafter, an example of using an RFID tag will be described, but inventory management can be performed in the same manner even in a case where a wireless communication tag other than the RFID tag is used.

An RFID tag in which product information is written is attached to each product managed by the inventory management system 100, and the product and the RFID tag are associated with each other. The RFID tag includes an integrated circuit (IC) chip that stores product information, an antenna for wireless communication, and the like.

The shape of the RFID tag and a method of attaching an RFID tag to a product are not particularly limited, and for example, a seal-type RFID tag may be attached to a product. Further, the RFID tag may also be attached to a price tag or a tag for a care label of a product.

The product information includes a product ID for uniquely identifying each product. Products are classified and managed in groups of minimum management units (stock keeping unit (SKU)). The product ID is a combination of an SKU ID assigned to an SKU group to which a product belongs and a serial number assigned in each SKU group.

For example, in a case where an ID (hereinafter referred to as SKU ID) of an SKU group to which a product belongs is "A" and a serial number assigned in the SKU group is "0001", a product ID of the product can be set as "A0001".

The product information may include a manufacturing number, a Japanese article number (JAN) code, an electronic product code (EPC), and the like, in addition to the product ID.

Note that the SKU is the smallest unit for classification, and products with the same appearance are usually classified into one SKU group. For example, in a case where clothes have the same design, size, and color, the clothes are classified into the same SKU group. However, an SKU classification condition is not limited thereto, and may be arbitrarily determined so as to facilitate product inventory management.

The inventory management system 100 includes a server 10, a point of sales system (POS) terminal 20, an information processing terminal 30, and an RFID tag reader/writer terminal 40. Each of the terminals 20 to 40 is used in a store and is connected to the server 10 via a network N so that each of the terminals 20 to 40 and the server 10 can communicate with each other.

The server 10 manages an inventory status of products in the store based on various information transmitted from the respective terminals 20 to 40, and provides, to the terminals 20 to 40, information such as an inventory quantity of the products and an inventory location. Hereinafter, each of the terminals 20 to 40 connected to the server 10 may be collectively referred to simply as an external terminal.

The POS terminal 20 includes an RFID tag reading unit 20a. The POS terminal 20 reads product information from an RFID tag of a product for sale by using the reading unit 20a, thereby identifying a price of the product and receiving payment. The POS terminal 20 also includes a barcode reading unit, and can also obtain product information by reading a barcode attached to a product.

The information processing terminal 30 is, for example, a personal computer (PC), a tablet PC, or a mobile phone having a communication function. The information processing terminal 30 can display various information provided from the server 10, such as an inventory quantity of products and an inventory location.

Further, the information processing terminal 30 can also be connected to an RFID tag creation device 50 to create a new RFID tag when the RFID tag is damaged or lost. The creation device 50 is, for example, an RFID printer.

The reader/writer terminal 40 reads or writes information from or in an RFID tag by performing wireless communication with the RFID tag.

The reader/writer terminal 40 may be an integrated type in which an information processing unit that controls reading or writing of information and a communication unit that performs wireless communication are provided in one housing. Alternatively, the reader/writer terminal 40 may be a separate type in which the information processing terminal 30 that functions as an information processing unit, such as a tablet PC or a mobile phone, can be mounted in a housing including a communication unit.

The shape of the reader/writer terminal 40 is not particularly limited, and the reader/writer terminal 40 may be a portable type, a stationary gate type, or the like.

All of the external terminals such as the POS terminal 20, the information processing terminal 30, and the reader/writer terminal 40 can perform product reception processing, product sales processing, product return processing, and the like. The external terminal reads product information from an RFID tag of a product in each processing and transmits the product information to the server 10.

Note that the information processing terminal 30 can transmit the product information to the server 10 by obtaining, from the reader/writer terminal 40, the product information read from the RFID tag.

### (Server)

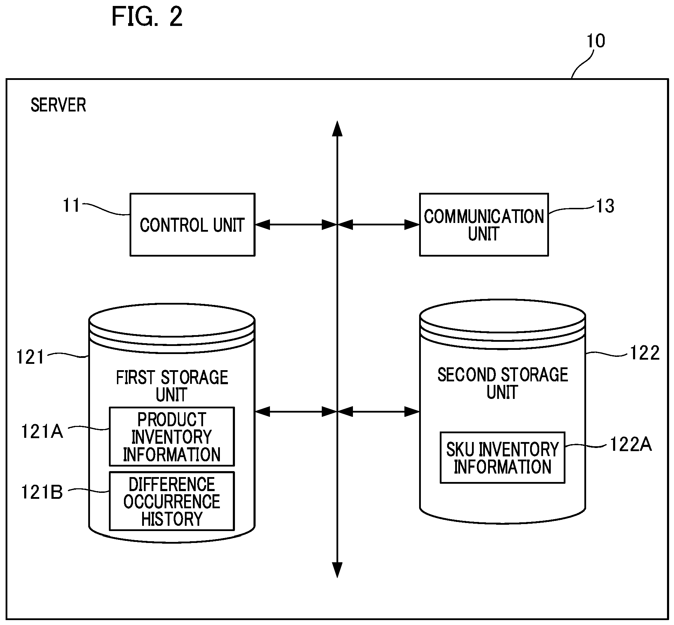

Fig. 2 illustrates components of the server 10 for each function. The server 10 includes a control unit 11, a first storage unit 121, a second storage unit 122, and a communication unit 13. Fig. 2 illustrates an example of a configuration of the server 10, and the configuration is not limited thereto. The server 10 may include other components, for example, an operation unit that receives an operation input or a display unit such as a display.

The control unit 11 is configured to include a processor such as a central processing unit (CPU), a memory such as a random access memory (RAM), and the like. The control unit 11 reads a program from the first storage unit 121 and executes the program, thereby executing various processing.

The control unit 11 generates and updates product inventory information 121A stored in the first storage unit 121 based on the product information transmitted from the external terminal. Since one product inventory information 121A is generated for each RFID tag, the control unit 11 can manage an inventory quantity of products by counting the number of product inventory information 121A, that is, the number of RFID tags.

The control unit 11 can also manage an inventory quantity of each SKU by counting the number of RFID tags for each SKU ID to which each product belongs. The control unit 11 may store the inventory quantity of each SKU in the second storage unit 122. Further, the control unit 11 can also provide information on the inventory quantity of products to the external terminal.

In a case where association between an RFID tag and a product is lost, and a difference thus occurs between an actual inventory quantity of products in the store and the number of RFID tags, once the occurrence of the difference is identified from a content of processing performed by the external terminal, the control unit 11 adjusts a count value of the number of the RFID tags according to a circumstance causing the difference. The control unit 11 manages the inventory quantity of products based on the count value after the adjustment.

The first storage unit 121 stores a program executed by the control unit 11, data necessary for executing the program, and the like. The first storage unit 121 can store, for example, the above-described product inventory information 121A. In addition, a processing history that a difference occurs between an actual inventory quantity of products and the number of RFID tags can be stored as a difference occurrence history 121B.

The second storage unit 122 can store the inventory quantity of each SKU counted by the control unit 11 as SKU inventory information 122A.

As the first storage unit 121 and the second storage unit 122, for example, a large capacity memory such as a hard disk can be used. In the present embodiment, an example in which the first storage unit 121 and the second storage unit 122 are arranged as separate memories on the same server 10 is described, but the first storage unit 121 and the second storage unit 122 may be the same memory, or the first storage unit 121 and the second storage unit 122 may be arranged on different servers.

The communication unit 13 performs communication with each of the terminals 20 to 40 on the network N. The network N is, for example, the Internet or a local area network (LAN).

### (Normal Inventory Management)

In the inventory management system 100, the external terminal performs various processing such as product reception processing, product sales processing, and product return processing, and the server 10 manages an inventory status of a product based on each processing content.

When a new product is received in the store, the clerk performs new product reception processing using the external terminal. The external terminal reads product information from an RFID tag attached to the product and transmits the product information to the server 10 together with information indicating an inventory location of the product and type information indicating that the processing content is the reception of the product.

The information on the inventory location is information on a location where the RFID tag of the product is read, among a plurality of locations such as a storefront and a back room. In a case of a portable terminal such as the information processing terminal 30 or the reader/writer terminal 40, information on a location selected by the clerk among locations displayed in a selectable manner may be transmitted.

In a case of a fixedly installed terminal such as the POS terminal 20, information on an installation location such as a storefront may be transmitted, the information being stored in the terminal in advance.

When the server 10 receives the type information indicating the reception of the product, the control unit 11 extracts a product ID from the product information transmitted from the external terminal, generates product inventory information 121A corresponding to the extracted product ID, and stores the product inventory information 121A in the first storage unit 121.

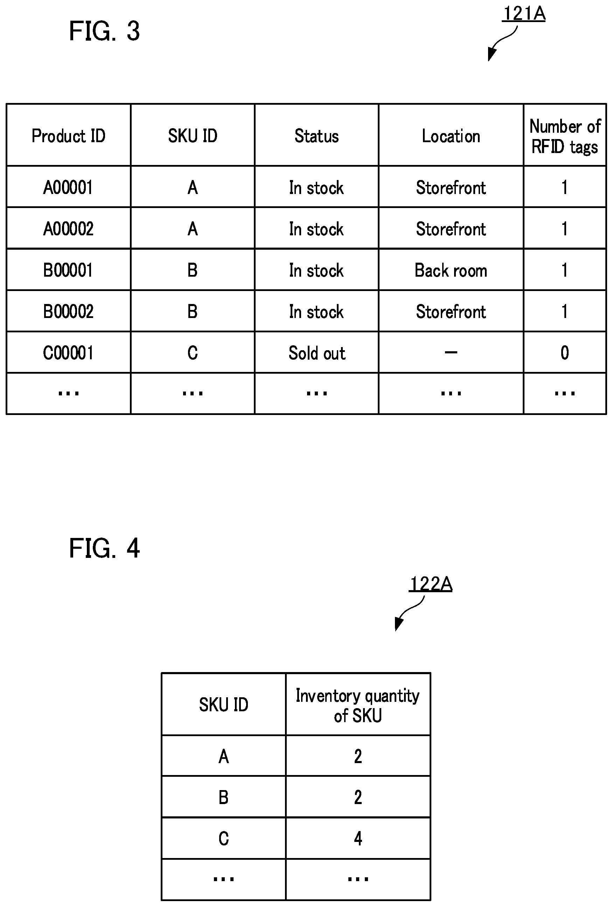

Fig. 3 illustrates an example of the product inventory information 121A. The product inventory information 121A includes items such as a product ID of each product, an SKU ID, a product status, a location where a product is currently placed, and the number of RFID tags attached to products.

For example, the control unit 11 stores a product ID of "A0001" extracted from product information, an SKU ID of "A" extracted from the product ID, and information on an inventory location of "storefront" transmitted together with the product information. At the time of performing the reception processing, the control unit 11 stores a status of "in stock". Further, the control unit 11 stores "1" as the number of RFID tags when the status is "in stock".

At the time of performing the sales processing for a product in stock, the external terminal reads product information from an RFID tag attached to the product and transmits the product information to the server 10 together with type information indicating that the processing content is the sales of the product. When the server 10 receives the type information indicating the sales of the product, the control unit 11 extracts a product ID from the product information.

The control unit 11 updates a status of product inventory information 121A corresponding to the product ID from "in stock" to "sold out". Products of which status is "sold out" are not subject to inventory management. Further, the control unit 11 updates the number of RFID tags from "1" to "0" according to the status of "sold out".

At the time of performing the return processing for a sold product, the external terminal reads product information from an RFID tag attached to the product and transmits the product information to the server 10 together with type information indicating that the processing content is the return of the product.

When the server 10 receives the type information indicating the return of the product, the control unit 11 extracts a product ID from the product information, and updates a status of product inventory information 121A corresponding to the product ID from "sold out" to "in stock". Further, the control unit 11 updates the number of RFID tags from "0" to "1" according to the status of "in stock".

When the stocktaking is performed, the server 10 updates product inventory information 121A of all products at once. At the time of performing the stocktaking, the clerk reads RFID tags of all products in stock in the respective locations such as the storefront and the back room by using the reader/writer terminal 40.

A reading result is transmitted from the reader/writer terminal 40 to the server 10. The server 10 updates the inventory location to a location where the RFID tag is read and updates the status to "in stock" in the product inventory information 121A corresponding to the product ID read from the RFID tag.

The server 10 updates, to "unidentified", a status of product inventory information 121A of which the status is not updated to "in stock", because a corresponding RFID tag is not read during the stocktaking.

In addition, the clerk may read an RFID tag by using the reader/writer terminal 40 for product confirmation. In this way, when an RFID tag of a product is read by the reader/writer terminal 40, in the server 10, the control unit 11 updates a status of the product to "in stock" and updates an inventory location of the product to a location where the RFID tag is read by the reader/writer terminal 40.

In the server 10, the control unit 11 can count the number of RFID tags managed by the product inventory information 121A for each SKU ID and store the number of RFID tags as an inventory quantity of each SKU in the second storage unit 122.

Fig. 4 illustrates an example of the SKU inventory information 122A. The SKU inventory information 122A includes, for example, an SKU ID and an inventory quantity of the SKU.

In a specific example in which a count value of "2" is obtained by counting the number of RFID tags with an SKU ID of "A" in the SKU inventory information 122A, the control unit 11 stores "2" as an inventory quantity of an SKU with the SKU ID of "A".

The clerk can inquire of the server 10 about an inventory quantity of an SKU of a product through the external terminal.

When an inquiry about an inventory quantity of an SKU is received from the external terminal, the server 10 obtains the inventory quantity of the SKU at each location from the SKU inventory information 122A and transmits the inventory quantity of the SKU to the external terminal.

In a case where association between products and RFID tags is clear, an actual inventory quantity of the products in the store matches the number of RFID tags, and thus an accurate inventory quantity can be provided in real time by counting the number of RFID tags even when an actual inventory quantity of the products in the store is changed due to the above-described reception processing, sales processing, or return processing.

### (Inventory Management in Case Where Difference Occurs between Actual Inventory Quantity of Products and Number of RFID Tags)

In a case where association between a product and an RFID tag is lost due to a loss of or damage to the RFID tag attached to the product, a product ID cannot be obtained from the RFID tag. Therefore, it is not possible to update the product inventory information 121A by using the product ID during the sales processing or return processing.

Even though an actual inventory quantity of products in the store is increased or decreased during the sales processing or return processing, the number of RFID tags in the product inventory information 121A is not changed. Therefore, a difference occurs between the actual inventory quantity of the products and the number of RFID tags.

On the other hand, in a case where a new RFID tag is issued to a product of which association with an RFID tag is lost due to a loss of or damage to the RFID tag, an actual inventory quantity of products in the store is not changed, but the number of RFID tags in the store is increased.

In addition, in a case where an RFID tag of which association with a product is lost due to falling off from the product is discarded, an actual inventory quantity of products in the store is not changed, but the number of RFID tags in the store is decreased. In either case, a difference occurs between an actual inventory quantity of products in the store and the number of RFID tags.

The server 10 adjusts a count value of the number of RFID tags according to a circumstance causing a difference between an actual inventory quantity of products and the number of RFID tags as described above, such as return processing or sales processing for a product of which association with an RFID tag is lost, new RFID tag issuing processing, or RFID tag discarding processing.

Whether or not a product, which is subjected to the return processing or sales processing by the external terminal, is a product of which association with an RFID tag is lost can be determined based on whether or not the RFID tag can be read. For example, when the product return processing is performed by the external terminal, in a case where association with a product is lost due to damage to or a loss of an RFID tag, a product ID cannot be obtained even in a case where the RFID tag is read, and a reading error occurs.

In this case, the clerk switches a reading mode of the external terminal from RFID to barcode, and causes the external terminal to read a barcode of an SKU ID printed on a price tag or care label of the product, or inputs an SKU ID that can be retrieved based on an appearance of the product, a product name on the price tag, or the like to the external terminal. The external terminal transmits, to the server 10, the SKU ID as product information of the returned product.

As described above, in a case where it is not possible to read the RFID tag, the SKU ID is transmitted to the server 10, instead of the product ID. Therefore, when the SKU ID is transmitted during the product return processing or product sales processing, the server 10 can determine that the product is a product of which association with an RFID tag is lost, and a difference has occurred between an actual inventory quantity of products and the number of RFID tags due to the return processing or sales processing.

On the other hand, in a case where the new RFID tag issuing processing, or RFID tag discarding processing is performed, a difference occurs between an actual inventory quantity of products and the number of RFID tags. Therefore, the server 10 can determine that a difference has occurred between the actual inventory quantity of products and the number of RFID tags when the type of a processing content transmitted from the external terminal is issuance of a new RFID tag or discarding of an RFID tag.

During the new RFID tag issuing processing, a product ID read from the RFID tag by the external terminal is transmitted to the server 10. Further, during the RFID tag discarding processing, in a case where an SKU ID can be obtained by reading a barcode of a product to which the RFID tag is attached or based on the appearance of the product, a product name, or the like, the SKU ID is transmitted from the external terminal to the server 10.

The server 10 can store a processing history that a difference occurs between an actual inventory quantity of products and the number of RFID tags in the first storage unit 121.

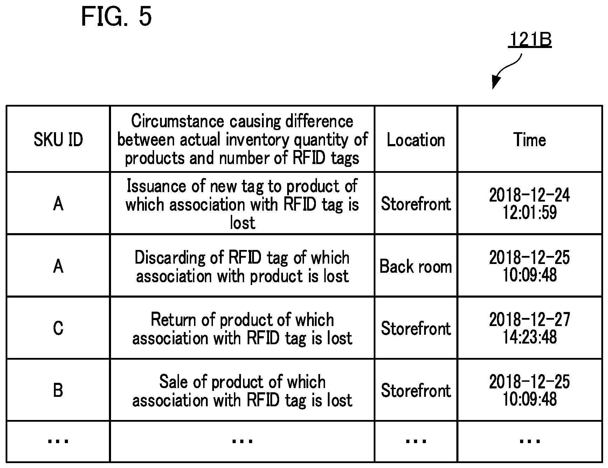

Fig. 5 illustrates an example of the difference occurrence history 121B stored in the first storage unit 121. The server 10 stores, in the first storage unit 121, an SKU ID of a product transmitted from the external terminal at the time of processing, a circumstance causing a difference between an actual inventory quantity of products and the number of RFID tags, a location and time where and when the processing is performed, and the like. The time when the processing is performed may be a time stamp obtained by the external terminal.

For example, in a case where the new RFID tag issuing processing is performed on a product, of which association with an RFID tag is lost and an SKU ID is identified as "A", in the information processing terminal 30, a difference occurrence history 121B indicating that a circumstance causing a difference between an actual inventory quantity of products and the number of RFID tags is "issuance of a new RFID tag to a product of which association with an RFID tag is lost ", a location where the difference occurs is "storefront", and a time is 12:01:59, December 24, 2018, is stored as illustrated in Fig. 5.

In a case of the new RFID tag issuing processing or RFID tag discarding processing, a product ID can be obtained from the RFID tag, and thus the product ID may also be stored as the difference occurrence history 121B.

When counting the inventory quantity, the control unit 11 of the server 10 adjusts a count value of the number of RFID tags based on the difference occurrence history 121B.

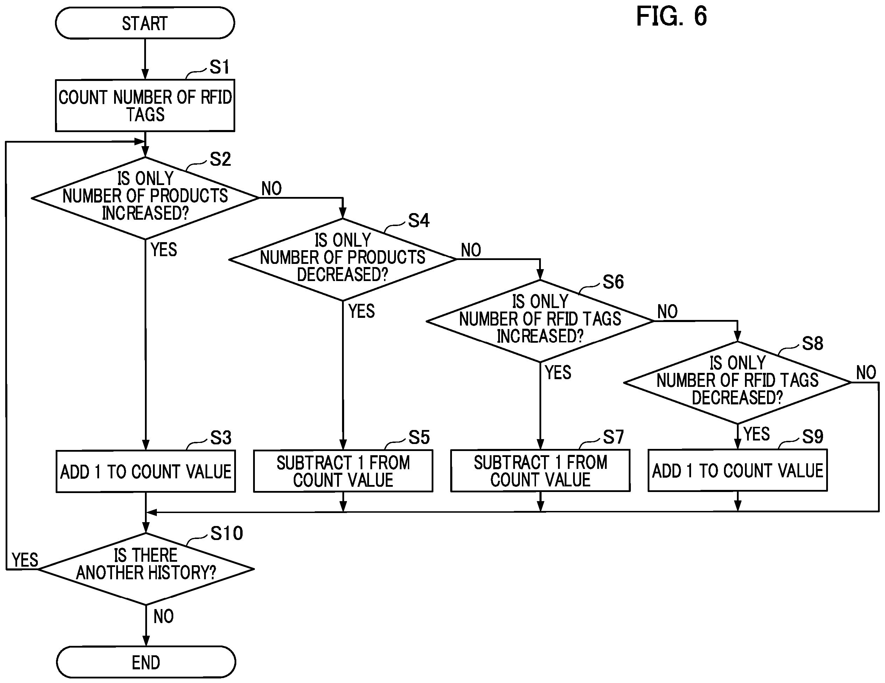

Fig. 6 illustrates a processing procedure when the control unit 11 of the server 10 counts an inventory quantity of each SKU of products. The control unit 11 counts the number of RFID tags corresponding to each SKU ID in the product inventory information 121A (Step S1). Next, the control unit 11 reads one difference occurrence history 121B from the first storage unit 121.

In a case where a circumstance causing a difference between an actual inventory quantity of products and the number of RFID tags in the read difference occurrence history 121B is return of a product of which association with an RFID tag is lost, the number of RFID tags managed by the product inventory information 121A is not changed, but the actual inventory quantity of products is increased.

When only the number of products is increased as described above (Step S2: YES), the control unit 11 adds 1 which is the number of returned products to a count value of the number of RFID tags of an SKU ID of the returned product (Step S3). By increasing the number of RFID tags by the number of products that is added due to the return, the count value of the number of RFID tags matches the actual inventory quantity of products.

On the other hand, in a case where the read circumstance is sale of a product of which association with an RFID tag is lost, the number of RFID tags managed by the product inventory information 121A is not changed, but the actual inventory quantity of products is decreased.

When only the number of products is decreased as described above (Step S4: YES), the control unit 11 subtracts 1 which is the number of sold products from a count value of the number of RFID tags of an SKU ID of the sold product (Step S5). By decreasing the number of RFID tags by the number of products that is subtracted due to the sale, the count value of the number of RFID tags matches the actual inventory quantity of products.

Further, when the read circumstance is issuance of a new RFID tag to a product of which association with an RFID tag is lost, the actual inventory quantity of products is not changed, but the number of RFID tags managed by the product inventory information 121A is increased.

When only the number of RFID tags is increased as described above (Step S6: YES), the control unit 11 subtracts 1 which is the number of issued RFID tags from a count value of the number of the RFID tags of an SKU ID of the issued product (Step S7). By decreasing the number of RFID tags by the number of RFID tags that is added due to the issuance, the count value of the number of RFID tags matches the actual inventory quantity of products.

In a case where the read circumstance is discarding of an RFID tag of which association with a product is lost, the actual inventory quantity of products is not changed, but the number of RFID tags managed by the product inventory information 121A is decreased.

When only the number of RFID tags is decreased as described above (Step S8: YES), the control unit 11 adds 1 which is the number of discarded RFID tags to a count value of the number of RFID numbers of an SKU ID of the discarded product (Step S9).

By increasing the number of RFID tags by the number of RFID tags that is decreased due to the discarding of the RFID tag, the count value of the number of RFID tags matches the actual inventory quantity of products.

In a case where there is another difference occurrence history 121B that has not yet been read (Step S10: YES), the procedure returns to the processing in Step S2, and the control unit 11 repeats the above-described processing in Steps S2 to S9.

When calculation of a count value of the number of RFID tags is completed according to all difference occurrence histories 121B (Step S10: NO), this processing ends. The count value after the calculation can be provided to the external terminal as an inventory quantity of products.

Note that the processing procedure for adjusting a count value of the number of RFID tags is not limited to the above-described processing procedure. For example, all the difference occurrence histories 121B caused by the same circumstance may be read and the count value may be adjusted at once.

As described above, in the inventory management system 100, the server 10 generates product inventory information 121A of each product based on product information read from an RFID tag attached to each product. The server 10 can count the number of RFID tags attached to products, respectively, based on the product inventory information 121A to obtain an inventory quantity of products and provide it to the external terminal.

Further, the server 10 determines that a difference has occurred between an actual inventory quantity of products and the number of RFID tags based on the processing content of the external terminal, and adjusts the count value of the number of RFID tags according to a circumstance causing the difference to manage the actual inventory quantity of products based on the count value after the adjustment.

As a result, even in a case where the association between the product and the RFID tag is lost, the inventory quantity of products managed based on the count value of the number of RFID tags matches the actual inventory quantity, and thus it is possible to manage an accurate inventory quantity of products in real time.

Since the RFID tag is provided separately from the product, there is always a possibility that the association with the product is lost. A QR code (registered trademark) of a product ID can be printed on the product or a care label sewn on the product so that the product and the product ID are not separated. However, product inventory management performed by collectively reading RFID tags cannot be performed, and thus the stocktaking becomes cumbersome.

On the other hand, the RFID tag can also be embedded in the product, the care label, or the like, so that it is possible to collectively read all RFID tags and prevent the RFID tag from being separated from the product. In this case, however, the RFID tag may be damaged, and thus the same problem as described above remains.

Meanwhile, according to the present embodiment, it is possible to maintain convenience of inventory management using an RFID tag, and provide an accurate inventory quantity of products in real time by a simple calculation of adjusting a count value of the number of RFID tags even in a case where association with a product is lost.

### (Modified Example)

In the above-described embodiment, the server 10 can also manage an inventory quantity of each SKU at each inventory location by counting the number of RFID tags with the same SKU ID and location in the product inventory information 121A.

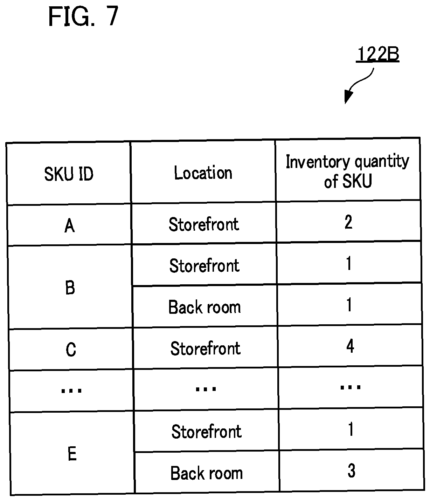

Fig. 7 illustrates an example of the SKU inventory information 122B in a case of managing an inventory quantity of each SKU at each inventory location. In the SKU inventory information 122B, an SKU ID is associated with an inventory quantity of an SKU for each inventory location.

When counting the inventory quantity according to the processing procedure illustrated in Fig. 6, the control unit 11 performs calculation to adjust the number of RFID tags at a location where a difference occurs between an actual inventory quantity of products and the number of RFID tags.

For example, according to the SKU inventory information 122B illustrated in Fig. 7, an inventory quantity of products of which an SKU ID is "E" at a location "storefront" is "1", and an inventory quantity of products of which an SKU ID is "E" at a location "back room" is "3". In a case where sales processing for a product of which association with an RFID tag is lost is performed, an SKU ID of the product is "E", and a location where the sales processing is performed is "storefront", the control unit 11 subtracts 1 the number of sold products from "1" which is the inventory quantity at the location "storefront".

As a result, information indicating that the inventory quantity of products of which the SKU ID is "E" at the "storefront" is "0" is provided.

As such, it is possible to provide an accurate inventory quantity of each SKU in real time even in a unit of inventory location. The clerk can easily grasp an exact inventory quantity of products of each SKU at each location.

Note that in a case where an inventory quantity at the "storefront" is "0" and an inventory quantity at the "back room" is "3", when sale processing for a product of which association with an RFID tag is lost is performed, the control unit 11 may estimate that the product in the back room is moved to the storefront, and subtract the number of sold products from the inventory quantity at the "back room".

Although the preferred embodiments of the present invention have been described above, the present invention is not limited to these embodiments, and various modifications and changes can be made within the scope of the gist thereof. For example, in the above-described embodiment, the control unit 11 of the server 10 calculates an inventory quantity of an SKU of products, but the calculation may be performed by a control unit provided in the external terminal.

Further, the server 10 generates the product inventory information 121A according to the reception processing in the above description. However, the server 10 may obtain product inventory information 121A of a product that is generated at the time of shipment of the product from a factory, and update the product inventory information 121A for various processing.

Further, the external terminal may display circumstances causing a difference between an actual inventory quantity and the number of RFID tags in a selectable manner, and the server 10 may adjust a count value of the number of RFID tags depending on a circumstance selected by the clerk.

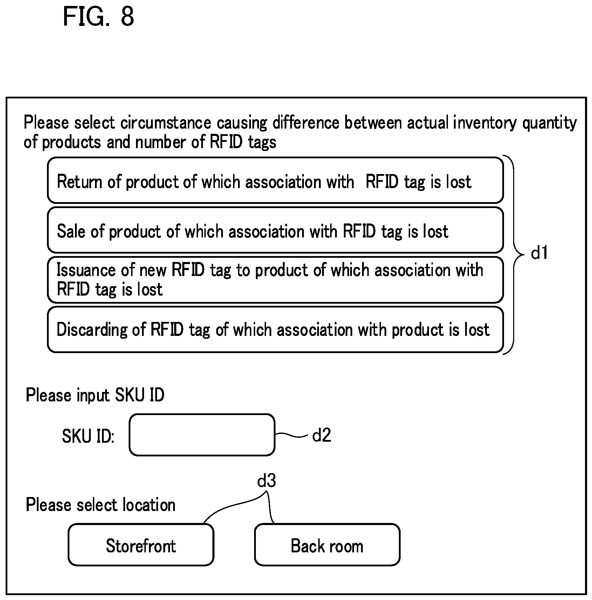

Fig. 8 illustrates an example of a display screen for selecting a circumstance. The display screen is provided with buttons d1 for selecting a circumstance causing a difference between an inventory quantity of products and the number of RFID tags. Further, the display screen is provided with an SKU ID input field d2 and buttons d3 for selecting a current location.

The clerk operates, on the display screen, a button d1 corresponding to the circumstance causing the difference between the actual inventory quantity of products and the number of RFID tags. In addition, the clerk inputs, in the input field d2, an SKU ID that can be identified from an appearance of a product, a content of a price tag, a barcode, or the like, and inputs a location where the difference occurs by operating the button d3.

The external terminal displays circumstances causing a difference between an actual inventory quantity and the number of RFID tags in a selectable manner as illustrated in Fig. 8, and transmits, to the server 10, the selected circumstance and information such as an SKU ID and a location. The server 10 adjusts a count value of the number of RFID tags as described above according to the information transmitted from the external terminal.

Further, according to the present invention, not only in a case of managing a product by using a wireless communication tag that transmits a product ID, but also in a case of managing a product by reading various codes such as a barcode of a product ID or a QR code (registered trademark), it is possible to accurately manage an inventory quantity of products, similarly to the case of using the wireless communication tag.

This application is based on and claims priority to Japanese Patent Application No. 2019-077962, filed on April 16, 2019, the disclosure of which is incorporated by reference herein in its entirety.

### Reference Signs List

- 100: Inventory management system
- 10: Server
- 11: Control unit
- 121: First storage unit
- 122: Second storage unit
- 20: POS terminal
- 30: Information processing terminal
- 40: Reader/writer terminal

## Claims

1. An inventory management system (100) comprising:
a server (10) that manages an inventory quantity of products by counting a number of wireless communication tags,
wherein the server (10) adjusts, when a difference occurs between an actual inventory quantity of the products in a store and the number of wireless communication tags, a count value of the number of wireless communication tags according to a circumstance causing the difference, and manages the inventory quantity of the products based on the count value of the number of wireless communication tags after the adjustment.

2. The inventory management system (100) according to claim 1, wherein
in a case where the actual inventory quantity is increased due to return of a product of which association with the wireless communication tag is lost, the server (10) adds a number of the returned products to the count value of the number of wireless communication tags.

3. The inventory management system (100) according to claim 1 or 2, wherein
in a case where the actual inventory quantity is decreased due to sale of a product of which association with the wireless communication tag is lost, the server (10) subtracts a number of the sold products from the count value of the number of wireless communication tags.

4. The inventory management system (100) according to any one of claims 1 to 3, wherein
in a case where a new wireless communication tag is issued to a product of which association with the wireless communication tag is lost, the server (10) subtracts a number of the issued new wireless communication tags from the count value of the number of wireless communication tags.

5. The inventory management system (100) according to any one of claims 1 to 4, wherein
in a case where the wireless communication tag of which association with the product is lost is discarded, the server (10) adds a number of the discarded wireless communication tags to the count value of the number of wireless communication tags.

6. The inventory management system (100) according to any one of claims 1 to 5, wherein
the server (10) manages the inventory quantity of the products based on the count value of the number of wireless communication tags, and manages an inventory quantity of the products of each minimum management unit by counting the number of wireless communication tags of each minimum management unit to which the products belong.

7. The inventory management system (100) according to any one of claims 1 to 6, wherein
the server (10) manages the inventory quantity of the products based on the count value of the number of wireless communication tags, and manages an inventory quantity of the products at each location by counting the number of wireless communication tags at each location to which the products belong.

8. The inventory management system (100) according to claim 1, further comprising:
an external terminal (20, 30, 40) connected to the server (10), wherein
the external terminal (20, 30, 40) displays circumstances causing a difference between the actual inventory quantity and the number of wireless communication tags in a selectable manner, and transmits a selected circumstance to the server (10), and
the server (10) adjusts the count value of the number of wireless communication tags according to the circumstance causing the difference between the actual inventory quantity and the number of wireless communication tags.

9. An inventory management method of an inventory management system (100) that manages an inventory quantity of products by counting the number of wireless communication tags, the inventory management method comprising:
a first step of adjusting, by the inventory management system (100), when a difference occurs between an actual inventory quantity of the products in a store and the number of wireless communication tags, a count value of the number of wireless communication tags according to a circumstance causing the difference; and
a second step of managing, by the inventory management system (100), the inventory quantity of the products based on the count value of the number of wireless communication tags after the adjustment.
